# EUROPEAN PATENT APPLICATION

(11) **EP 1 094 673 A2**
(43) Date of publication of application: **25.04.2001**
(21) Application number: 00103306.7
(22) Date of filing: 18.02.2000
(51) Int. Cl.: H04N 9/31

(54) **Projecting device for displaying electronic images**

(30) Priority: 20.10.1999 US 421246
(71) Applicant: Primax Electronics Ltd, Hsi Chih Town, Taipei Hsien (TW)
(72) Inventor: Lin, Shang-Yi, c/o Primax Electronics Ltd., Hsi Chih Town Taipei Hsien, Taiwan, ROC (TW)
(74) Representative: Bauer, Robert, Dipl.-Ing.

(57) **Abstract**

A projecting device (40) for displaying electronic images and including light separating means for separating red, green and blue light beams and modulation units (44, 46, 48) for separately modulating these different light beams employs polarized light beams the polarization of which is changed in the polarization units. The light separating means are comprised in an optic module (50) including first and second polarization beam splitter mirrors (70, 74) and a first dichromatic mirror (72). A second dichromatic mirror (76) in advance of the optic module (50) separates a polarized trichromatic light beam into a polarized monochromatic beam and a polarized bichromatic beam. The polarization of one of the monochromatic beams within the bichromatic beam is then converted into another polarization thus to obtain three differently polarized monochromatic beams for modulation.

The light separation thus can be achieved without different traveling distances.

## Description

The present invention relates to a projecting device according to the pre-characterizing clause of claim 1.

In a corresponding prior art projecting device the light beam supplied by the light source is a white light beam and the light separating means include a plurality of dichroic and reflecting mirrors arranged along a substantially U-shaped path. Thus, the distance traveled by the green light beam is considerably longer than that of each of the red and blue light beams. Since the travelling distance affects the light intensity, two focussing lenses have additionally been installed in the path of the green light beam. This, however, renders the structure complicated and costly.

This in mind, the present invention aims at providing a corresponding projecting device which is simpler in design and less expensive.

This is achieved by a projecting device according to claim 1. The dependent claims pertain to corresponding further developments and improvements.

As will be seen more clearly from the detailed description following below, the claimed device has a relatively simple structure allowing the distances traveled by the red, green and blue light beams to be made substantially equal and, moreover, short. Accordingly, any extra lenses can be avoided same as, as the case may be, one of the mirrors.

In the following, the invention is further illustrated by way of example, taking reference to the accompanying drawings. Thereof
Fig. 1 is a schematic diagram of a projecting device for an LCD projector according to the prior art,
Fig. 2 is a schematic diagram of a projecting device for an LCD projector according to the present invention,
Fig. 3 is a schematic diagram of the L-shaped optic module shown in Fig. 2,
Fig. 4 is a schematic diagram of the first modulation unit shown in Fig. 2,
Fig. 5 is a schematic diagram of the input lens set shown in Fig. 2,
Fig. 6 is a schematic diagram of an alternative input lens set in connection with the present invention, and
Fig. 7 is a schematic diagram of a further input lens set according to the present invention.

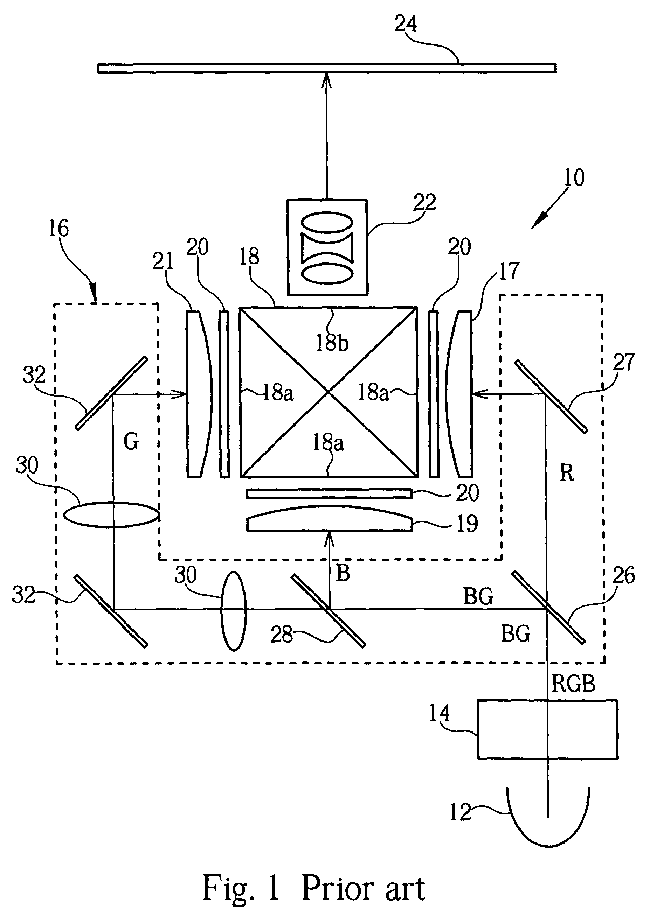

The prior art projecting device 10 of Fig. 1 comprises a light source 12, a uniform illumination optical device 14, a light separating device 16, a trichromatic prism 18, three modulating units 20, a projecting lens 22 and three focussing lenses 17, 19 and 21. The light source 12 produces a white beam of light. The uniform illumination optic device 14 installed subsequent the light source 12 converges the light emitted from the light source 12 into an approximately square-shaped beam with a uniformly distributed light intensity. The light separating device 16 separates the square-shaped beam into red (R), green (G) and blue (B) color input beams. The approximately square-shaped trichromatic prism 18, having three input sides 18a and an output side 18b, combines the red (R), green (G) and blue (B) input beams into an output beam. The three modulating units 20 are installed in front of their associated input sides 18a of the trichromatic prism 18 to modulate the three input beams. The three focussing lenses 17, 19 and 21, separately installed in front of the three modulating units 20, focus the three input beams from the light separating device 16 onto the three modulating units 20. The projecting lens 22 installed in front of the output side 18b of the trichromatic prism 18 projects the combined output beam from the trichromatic prism 18 onto a screen 24. Each modulating unit 20 consists of a transparent monochromatic liquid crystal display panel used to display a monochromatic image. The trichromatic prism 18 combines the three monochromatic images to form the output color image.

The light separating device 16 comprises a first dichroic mirror 26 to separate the red light from the square-shaped white beam from the uniform illumination optic device 14, a reflecting mirror 27 reflects the red light from the first dichroic mirror 26 onto the focussing lens 17. The remaining light is reflected from the dichroic mirror 26 to a second dichroic mirror 28 that separates the blue light and reflects it to the focussing lens 19. Two optical lenses 30 and two reflecting mirrors 32 pass and reflect the remaining green light to the focussing lens 21.

The figure clearly shows that the distance traveled by the green light beam is much longer than that of each of the red and blue light beams. Since the travelling distance affects the light intensity, the two optical lenses 30 installed in front of the two reflecting mirrors 32 are essential to converge the green light so as to compensate for its loss of intensity. However, as mentioned before, apart from the relatively large number of mirrors, the installation of the two optical lenses 30 renders the structure of the light separating device 16 complicated and costly.

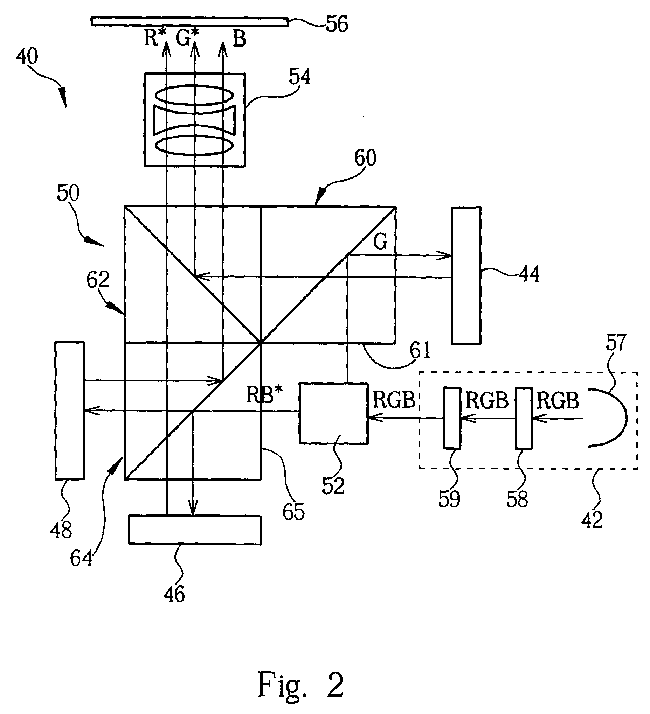

Fig. 2 is a schematic diagram of a projecting device 40 of an LCD projector according to the present invention. The projecting device 40 comprises a light source 42 for generating a polarized trichromatic beam comprising red, green and blue beams of the same polarization, first, second and third modulation units 44, 46, 48, respectively, each for modulating a polarized monochromatic beam and changing its polarization by reflection, an L-shaped optic module 50 for controlling the path of each polarized monochromatic beam; an input lens set 52 installed between the light source 42 and the L-shaped optic module 50, and a projecting lens 54 used to project an output beam from the L-shaped optic module 50 onto a screen 56.

The light source 42 comprises a light tube 57 used to generate unpolarized trichromatic light with red, green and blue components, a polarization converter 58 used to convert the unpolarized trichromatic light into a polarized trichromatic beam, and a light uniforming device 59 used to uniform the unpolarized trichromatic light emitted from the light tube 57 or the polarized trichromatic beam emitted from the polarization converter 58.

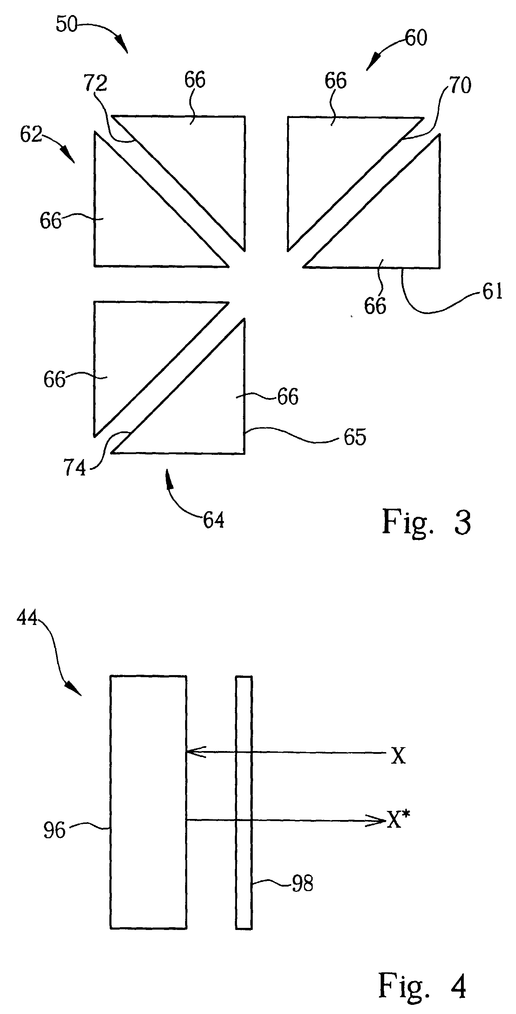

Fig. 3 is a schematic diagram of the L-shaped optic module 50 shown in Fig. 2. The L-shaped optic module 50 comprises first, second and third transparent rectangular columns 60, 62, 64. The three rectangular columns 60, 62, 64 are formed from six transparent triangular columns 66. The second rectangular column 62 is connected between the first and third rectangular columns 60, 64. Two polarization beam splitter mirrors 70 and 74 and a dichromatic mirror 72 are each installed between two triangular columns 66. The first and second polarization beam splitter mirrors 70 and 74 are installed separately along the diagonal faces of the first and third rectangular columns 60, 64. The dichromatic mirror 72 is installed along the diagonal face of the second rectangular column 62. The first and second polarization beam splitter mirrors 70 and 74 are aligned along a common approximately flat surface, and the dichromatic mirror 72 is perpendicular to this flat surface. The L-shaped optic module 50 comprises a right-angle-shaped recess formed by perpendicular sides 61, 65 of the first and third rectangular columns 60, 64 for receiving the polarized monochromatic beam and polarized bichromatic beam from the input lens set 52.

Fig. 4 is a schematic diagram of the first modulation unit 44 shown in Fig. 2. Each modulation unit 44, 46 and 48 comprises a reflective image modulating unit 96 for reflecting an incident beam to generate a reflected beam, and a quarter-wave retarder 98 for retarding the incident beam and the reflected beam for a quarter of the beam's wavelength so that the incident beam and the reflected beam generated by the modulation unit 44 will have opposite polarizations. The reflective image modulating unit 96 can be a digital micro-mirror device or a liquid crystal display.

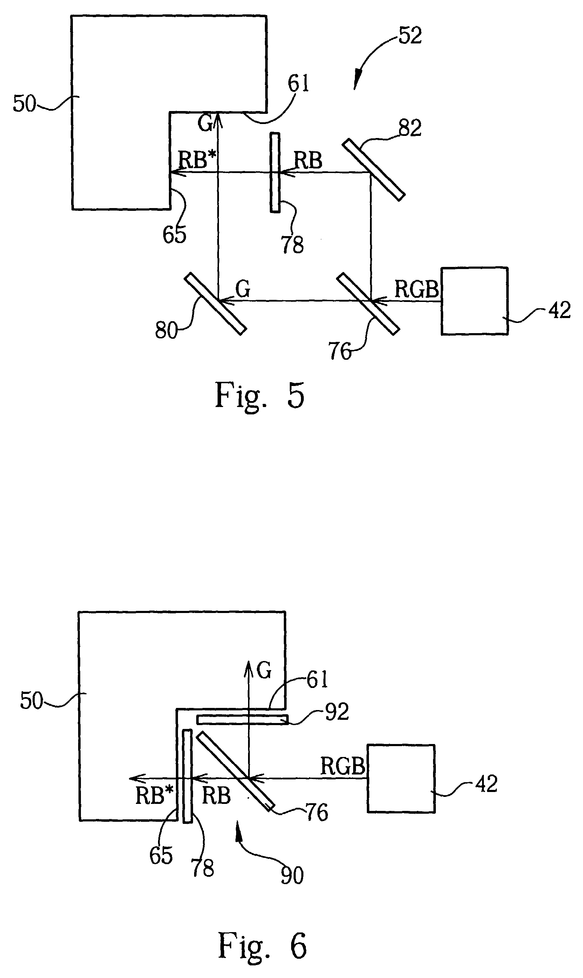

Fig. 5 is a schematic diagram of the input lens set 52 shown in Fig. 2. The input lens set 52 is installed between the light source 42 and the L-shaped optic module 50 and comprises a second dichromatic mirror 76 for separating the polarized trichromatic beam into a polarized green monochromatic beam and a polarized red and blue bichromatic beam. The input lens set 52 further comprises a retarder film 78 for converting the polarization of the polarized blue monochromatic beam within the polarized red and blue bichromatic beam to an opposite polarization, and two reflection mirrors 80, 82 for separately reflecting the green monochromatic beam and the red and blue bichromatic beam into the perpendicular sides 61 and 65 of the right-angle-shaped recess of the L-shaped optic module 50 in two mutually perpendicular directions. The green monochromatic beam is transmitted onto the first polarization beam splitter mirror 70 inside the first rectangular column 60 (Fig.3), and the red and blue bichromatic beam is transmitted onto the second polarization beam splitter mirror 74 inside the third rectangular column 64.

Referring to Figs. 2 and 3, the first polarization beam splitter mirror 70 reflects the green monochromatic beam to the first modulation unit 44. The first modulation unit 44 returns a modulated reflected beam with an opposite polarization that penetrates the first polarization beam splitter mirror 70 to the dichromatic mirror 72 inside the second rectangular column 62. In an alternative arrangement (not shown) the first modulation unit 44 could also be placed outside the alternate triangular column 66 of the first rectangular column 60. In this case, the green monochromatic beam penetrates the first polarization beam splitter mirror 70 and is transmitted to the first modulation unit 44, and the modulated reflected beam from the first modulation unit 44 is then reflected by the first polarization beam splitter mirror 70 onto the dichromatic mirror 72.

The red polarized monochromatic beam within the bichromatic beam (red and blue) is reflected by the second polarization beam splitter mirror 74 to the second modulation unit 46. The oppositely polarized blue monochromatic beam of the bichromatic beam penetrates the second polarization beam splitter mirror 74 and is transmitted to the third modulation unit 48. The modulated red beam reflected from the second modulation unit 46 with an opposite polarization now penetrates the second polarization beam splitter mirror 74 and is transmitted to the dichromatic mirror 72. The modulated blue beam reflected from the third modulation unit 48 is reflected by the second polarization beam splitter mirror 74 to the dichromatic mirror 72.

Actually, the second polarization beam splitter mirror 74 can also deal with the red and blue beams in an alternative manner, initially reflecting the incident blue beam (instead of the red) and transmitting the incident red beam (instead of the blue). In this case, the second modulation unit 46 would modulate a blue beam instead of a red, and the third modulation unit 48 would modulate a red beam instead of blue.

Finally, the modulated green beam transmitted through the first polarization beam splitter mirror 70 is reflected by the dichromatic mirror 72 into a predetermined output direction. The modulated red and blue beams transmitted from the second polarization beam splitter mirror 74 penetrate the dichromatic mirror 72 and continue along the predetermined output direction so that the red, green and blue modulated beams are combined and passed to the projecting lens 54. However, if the projecting lens 54 and the screen 56 are arranged outside an alternate triangular column 66 of the second rectangular column 62 (not shown), then the modulated green beam transmitted from the first polarization beam splitter mirror 70 penetrates the dichromatic mirror 72 and passes on along a predetermined output direction. The modulated red and blue beams transmitted from the second polarization beam splitter mirror 74 are reflected by the dichromatic mirror 72 into the predetermined output direction. Hence, the modulated green, red and blue beams are combined to form the output beam that is transmitted to the projecting lens 54.

Fig. 6 is a schematic diagram of an alternative input lens set 90 according to the present invention. The second dichromatic mirror 76 of the input lens set 90 is positioned along a diagonal line between the two perpendicular sides 61, 65 of the recess of the L-shaped optic module 50. The retarder film 78 is attached to one of the two perpendicular sides of the recess to invert the polarization of the blue monochromatic beam within the polarized red and blue bichromatic beam transmitted from the second dichromatic mirror 76. The input lens set 90 further comprises a polarization film 92 attached to the other side of the recess for purifying the polarization of the polarized monochromatic beam transmitted from the second dichromatic mirror 76.

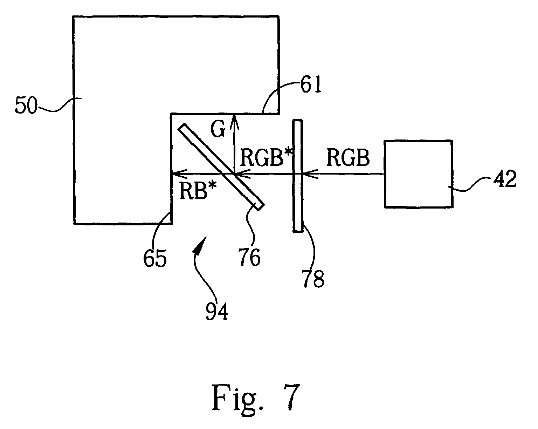

Fig. 7 is a schematic diagram of a third input lens set 94 according to the present invention. The second dichromatic mirror 76 of the input lens set 94 is located along a diagonal line between the two perpendicular sides 61, 65 of the recess of the L-shaped optic module 50. The retarder film 78 is located between the second dichromatic mirror 76 and the light source 42. The retarder film 78 of the input lens set 94 first inverts the polarization of the blue monochromatic beam within the polarized trichromatic beam (red, green and blue). The second dichromatic mirror 76 separates the polarized trichromatic beam into a polarized green monochromatic beam and a polarized bichromatic beam that contains two polarized monochromatic beams (red and blue) with opposite polarizations.

The figures of the projecting device 40 clearly show that the distances traveled by the red, green and blue beams are approximately equal and very short. Consequently, the projecting device 40 does not need to use any extra lenses and mirrors to separate the beams or to compensate for differences in luminosity caused by unequal light paths. Furthermore, each component of the input lens sets 52, 90, 94 is installed in an adjustable way in the projecting device 40, so the user can easily adjust the light path of each incident beam. Compared to the projecting device 10 of the LCD projector according to the prior art, the projecting device 40 of the present invention has a very simple structure, is less expensive and more efficient.

## Claims

1. A projecting device (40) for displaying electronic images and comprising:
- a light source (42) for generating a light beam,
- light separating means for separating red, green and blue monochromatic light beams from the light beam generated by said light source (42), and
- first, second and third modulation units (44, 46, 48) for modulating a respective one of said red, green and blue light beams,
**characterized** in
that said light source (42) generates a polarized trichromatic light beam comprising red, green and blue light of the same polarization,
that the red, green and blue light beams modulated by said modulation units (44, 46, 48) are polarized light beams the polarization of which is changed within the modulation units (44, 46, 48) by reflection,
that said light separating means are comprised in an optic module (50) including first and second polarization beam splitter mirrors (70, 74) substantially aligned along a common flat surface, and a first dichromatic mirror (72) perpendicular to said flat surface,
that an input lens set (52; 90; 94) is installed between the light source (42) and the optic module (50) and comprises a second dichromatic mirror (76) for separating the polarized trichromatic light beam into a polarized monochromatic beam and a polarized bichromatic beam, and a retarder film (78) for converting the polarization of one polarized monochromatic beam within said polarized bichromatic beam into another polarization, the polarized monochromatic beam and polarized bichromatic beam being inputted into the optic module (50) in two mutually perpendicular directions, and
that the polarized monochromatic beam is transmitted to the first polarization beam splitter mirror (70) and the polarized bichromatic beam is transmitted to the second polarization beam splitter mirror (74), the first polarization beam splitter mirror (70) transmits the monochromatic beam to the first modulation unit (44) and transmits the first modulated beam reflected from the first modulation unit (44) to the first dichromatic mirror (72), and the second polarization beam splitter mirror (74) separates the polarized bichromatic beam into two polarized monochromatic beams which are separately transmitted to the second and third modulation units (46, 48), and then transmits the second and third modulated beams reflected from the second and third modulation units (46, 48) to the first dichromatic mirror (72), and the first dichromatic mirror (72) combines the first, second and third modulated beams to form an output light beam.

2. The projecting device (40) of claim 1 wherein the optic module (50) is an L-shaped optic module (50) and comprises first, second and third transparent and rectangular columns (60, 62, 64), the second column (62) is connected between the first and third columns (60, 64), the first and second polarization beam splitter mirrors (70, 74) are separately installed inside the first and third columns (60, 64) along diagonal lines thereof, the first dichromatic mirror (72) is installed inside the second column (62) along one diagonal line, and the L-shaped optic module (50) comprises a right-angle-shaped recess and is formed by one vertical side (61, 65) of each of the first and third columns (60, 64) for receiving the polarized monochromatic beam and polarized bichromatic beam from the input lens set (52, 90, 94).

3. The projecting device (40) of claim 1 further comprising a projecting lens (54) used for projecting the beam outputted from the first dichromatic mirror (72) onto a screen (56).

4. The projecting device (40) of claim 2 wherein the three rectangular columns (60, 62, 64) are formed by using a plurality of transparent triangular columns (66) and each polarization beam splitter mirror (70, 74) and the first dichromatic mirror (72) are installed between two triangular columns (66).

5. The projecting device (40) of claim 1 wherein the light source (42) comprises a light tube (57) used for generating an unpolarized trichromatic light including red, green, and blue light, and a polarization converter (58) used for converting the unpolarized trichromatic light into a polarized trichromatic beam.

6. The projecting device (40) of claim 5 wherein the light source (42) further comprises a light uniforming device (59) used for uniforming the unpolarized trichromatic light emitted from the light tube (57) or the polarized trichromatic beam converted by the polarization converter (58) along a predetermined direction.

7. The projecting device (40) of claim 2 wherein the second dichromatic mirror (76) within the input lens set (52, 90) firstly separates the polarized trichromatic beam into a polarized monochromatic beam and polarized bichromatic beam and then the retarder film (78) converts the polarization of one polarized monochromatic beam within the polarized bichromatic beam into another polarization.

8. The projecting device (40) of claim 7 wherein the input lens set (52) further comprises two reflection mirrors (80, 82) used for perpendicularly transmitting said polarized monochromatic and bichromatic beams to the two vertical sides (61, 65) of the recess of the L-shaped optic module (50).

9. The projecting device (40) of claim 7 wherein the second dichromatic mirror (76) is positioned along a diagonal line between the two vertical sides (61, 65) of the recess of the L-shaped optic module (50) and the retarder film (78) is attached to one of the two vertical sides (65) of the recess for converting the polarization of one polarized monochromatic beam within the polarized bichromatic beam transmitted from the second dichromatic mirror (76) into another polarization.

10. The projecting device (40) of claim 9 wherein the input lens set (90) further comprises a polarization film (92) attached to the other vertical side (61) of the recess for purifying the polarization of the polarized monochromatic beam transmitted from the second dichromatic mirror (76).

11. The projecting device (40) of claim 2, wherein the retarder film (78) of the input lens set (94) first converts the polarization of one polarized monochromatic beam within the polarized trichromatic beam into another polarization, and the second dichromatic mirror (76) then separates the polarized trichromatic beam into a polarized monochromatic beam and a polarized bichromatic beam which contains two polarized monochromatic beams of different polarizations.

12. The projecting device (40) of claim 11 wherein the second dichromatic mirror (76) is located along a diagonal line between the two vertical sides (61, 65) of the recess of the L-shaped optic module (50) and the retarder film (78) is located between the second dichromatic mirror (76) and the light source (42).

13. The projecting device (40) of claim 1 wherein the first polarization beam splitter mirror (70) reflects the monochromatic beam to the first modulation unit (44), and the first modulated beam reflected from the first modulation unit (44) penetrates the first polarization beam splitter mirror (70) and passes on to the first dichromatic mirror (72).

14. The projecting device (40) of claim 1 wherein the monochromatic beam penetrates the first polarization beam splitter mirror (70) and passes on to the first modulation unit (44), and the first modulated beam reflected from the first modulation unit (44) is reflected by the first polarization beam splitter mirror (70) to the first dichromatic mirror (72).

15. The projecting device (40) of claim 1 wherein one polarized monochromatic beam within the bichromatic beam is reflected by the second polarization beam splitter mirror (74) to the second modulation unit (46), the other polarized monochromatic beam of the bichromatic beam penetrates the second polarization beam splitter mirror (74) and passes on to the third modulation unit (48), the second modulated beam reflected from the second modulation unit (46) penetrates the second polarization beam splitter mirror (74) and passes on to the first dichromatic mirror (72), and the third modulated beam reflected from the third modulation unit (48) is reflected by the second polarization beam splitter mirror (74) to the first dichromatic mirror (72).

16. The projecting device (40) of claim 1 wherein each modulation unit (44, 46, 48) comprises a reflective image modulating device (96) for modulating an incident beam by reflection to generate a reflected beam, and a quarter-wave retarder (98) used for retarding the incident beam and reflected beam for a quarter of the wavelength so that the incident beam and the reflected beam generated by the modulation unit (44, 46, 48) have opposite polarizations.

17. The projecting device (40) of claim 16 wherein the reflective image modulating device (96) is a digital micro-mirror device.

18. The projecting device (40) of claim 16 wherein the reflective image modulating device (96) is a liquid crystal display.

19. The projecting device (40) of claim 1 wherein the first modulated beam transmitted from the first polarization beam splitter mirror (70) is reflected by the first dichromatic mirror (72) to a predetermined output direction, and the second and third modulated beams transmitted from the second polarization beam splitter mirror (74) penetrate the first dichromatic mirror (72) and pass on along the predetermined output direction so that the first, second and third modulated beams are combined to form the output light beam.

20. The projecting device (40) of claim 1 wherein the first modulated beam transmitted from the first polarization beam splitter mirror (70) penetrates the first dichromatic mirror (72) and passes on along a predetermined output direction, and the second and third modulated beams transmitted from the second polarization beam splitter mirror (74) are reflected by the first dichromatic mirror (72) to the predetermined output direction so that the first, second and third modulated beams are combined to form the output light beam.
